# EUROPÄISCHE PATENTSCHRIFT

(11) **EP 1 855 089 B1**
(45) Veröffentlichungstag und Bekanntmachung des Hinweises auf die Patenterteilung: **29.03.2017**
(21) Anmeldenummer: 07007739.1
(22) Anmeldetag: 16.04.2007
(51) Int. Cl.: G01D 18/00, H01L 21/66, G01D 11/24

(54) **Monolithische Sensoranordnung bzw. Verfahren zum Ansteuern einer monolithischen Sensoranordnung**
Monolithic sensor assembly or method for actuating a monolithic sensor assembly
Dispositif de capteur monolithique ou procédé de commande d'un dispositif de capteur monolithique

(30) Priorität: 11.05.2006 DE 102006022283
(43) Veröffentlichungstag der Anmeldung: 14.11.2007
(73) Patentinhaber: Micronas GmbH, 79108 Freiburg (DE)
(72) Erfinder: Bidenbach, Reiner, 79279 Vörstetten (DE); Franke, Jörg, 79117 Freiburg (DE); Ritter, Joachim, 79540 Lörrach (DE)
(74) Vertreter: Koch Müller Patentanwaltsgesellschaft mbH

(56) Entgegenhaltungen:
- EP-A2- 1 626 381
- WO-A1-2005/005930
- US-A- 5 621 398
- US-A- 6 114 947
- US-A1- 2005 132 808
- US-B1- 6 484 107
- ANONYMOUS: "HART, Field Communications Protocol, Application Guide", HART FIELD COMMUNICATIONS PROTOCOL APPLICATION GUIDE, XX, XX, 1 January 1999 (1999-01-01), pages 1-79, XP002219606,

## Beschreibung

Die Erfindung bezieht sich auf eine monolithische Sensoranordnung mit den oberbegrifflichen Merkmalen gemäß Patentanspruch 1, bzw. auf ein Verfahren zum Ansteuern einer monolithischen Sensoranordnung mit den Merkmalen gemäß Patentanspruch 13 oder 14.

DE 198 19 265 C1 beschreibt ein Verfahren zum Parametrieren einer integrierten Schaltungsanordnung sowie eine integrierte Schaltungsanordnung dafür. Ausgegangen wird dabei von einer integrieren Schaltungsanordnung, welche im Wesentlichen fest verdrahtete bzw. fest verbundene Komponenten aufweist. Durch eine Parametrisierung können Parameter für den Betrieb der Schaltungsanordnung vorgegeben werden. Zur Eingabe der Parameter dient ein Versorgungsspannungsanschluss, an welchem eine Versorgungsspannung anliegt. Die eigentlichen Parameter werden der Versorgungsspannung aufmoduliert, wobei ein dem Versorgungsspannungsanschluss nachgeschalteter Komparator die anliegende Versorgungsspannung daraufhin prüft, ob diese über einen Schwellenwert hinaus ansteigt. Der Schwellenwert liegt dabei einpegelig oberhalb der für den Betrieb erforderlichen Versorgungsspannung der integrierten Schaltungsanordnung. Außerdem umfasst die integrierte Schaltungsanordnung gemäß bestimmter Ausführungsformen einen Hall-Sensor zum Erfassen eines Magnetfelds, welches auf die integrierte Schaltungsanordnung einwirkt. Mittels des Sensors erfasste Daten werden über einen analogen Ausgangsanschluss ausgegeben.

Allgemein bekannt sind außerdem Gehäuse mit einer großen Vielzahl an Anschlusskontakten in Form von so genannten Pins, wobei die Gehäuse zur Aufnahme von unter anderem integrierten Schaltungskomponenten dienen. Bekannt ist dabei, einen frei programmierbaren digitalen Prozessor mit weiteren für den Betrieb eines Prozessors erforderlichen Komponenten in dem Gehäuse aufzunehmen. Üblicherweise dienen dabei zwei Anschlusskontakte des Gehäuses zum Anlegen einer Versorgungsspannung und einer Basisspannung, zwei weitere Anschlusskontakte zum Anlegen eines Erdanschlusses bzw. einer Null-Spannung und einer Betriebsspannung sowie eine Vielzahl weiterer Anschlusskontakte zum Ein- oder Ausgeben von Daten.

Monolithische Sensoren, beispielsweise in Form eines HallSensors, welche in derartigen Gehäusen mit zwei oder drei Anschlusskontakten aufgenommen sind, sind bisher rein analog aufgebaut und nutzen hart verdrahtete digitale Signalverarbeitungs-Komponenten sowie fest eingebaute Schnittstellen und Protokolle nach außen. Im Fall von zwei Anschlusskontakten wird an diesen einerseits eine Versorgungsspannung und andererseits eine Basis- oder Erdspannung angelegt. Im Fall von drei Anschlusskontakten wird ein dritter Anschlusskontakt speziell für eine Ein-/ Ausgabe von Daten bereitgestellt. Bei derartigen monolithischen Sensoren in einem solchen Gehäuse sind auch weitere Funktionen, beispielsweise ein Abgleich bzw. eine Kompensation externer Störgrößen wie Temperatureinflüssen, bislang fest verdrahtet. Allenfalls einzelne Parameter bzw. Variablen der durch die harte Verdrahtung fest vorgegebenen Algorithmen können über eine Speichereinstellung, beispielsweise die Belegung eines Registers oder eines EEPROM verändert werden.

Nachteilhaft bei solchen monolithischen Sensoren in einem derartigen Gehäuse mit zwei oder drei Anschlusskontakten ist, dass diese nicht flexibel an neue Schnittstelienstandards und neue Protokolle angepasst werden können. Insbesondere können keine neuen Algorithmen zur digitalen Signalverarbeitung und/oder zum Abgleich bzw. zur Kompensation externer Störgrößen getestet und implementiert werden.

Aus der US 6 484 107 B1 und der US 5 621 398 sind Vorrichtungen zur Übertragung von Daten bekannt. Hierbei ist unter anderem in einem Gehäuse neben einem Sensor auch ein Prozessor integriert. Des Weiteren ist aus der US 2005 / 0132808 A1 eine Sensorvorrichtung mit einem Zwei-Draht Bus bekannt, wobei Daten auf der Grundlage des sogenannten HART Protokolls ausgetauscht werden. Aus der EP 1 626 381 A2 ist ein zwei Draht-Sensoranordnung bekannt, bei der die Daten auf die Versorgungsspannung aufmoduliert werden. Aus der WO 2005 / 005 930 A1 ist eine integrierte Sensoranordnung bekannt.

Die Aufgabe der Erfindung besteht darin, einen monolithischen Sensor in einem Gehäuse mit vorzugsweise nur zwei oder drei Anschlusskontakten derart auszugestalten, dass eine nachträgliche Anpassung an veränderte Betriebsbedingungen möglich ist. Insbesondere sollen neue Schnittstellenstandards und Protokolle Sowie neue Algorithmen zur digitalen Signalverarbeitung und/oder zum Abgleich bzw. zur Kompensation externer Störgrößen implementiert werden können.

Diese Aufgabe wird durch einen monolithischen Sensor mit den Merkmalen gemäß Patentanspruch 1 bzw. durch Verfahren zum Ansteuern eines monolithischen Sensors mit den Merkmalen gemäß Patentanspruch 13 oder 14 gelöst. Vorteilhafte Ausgestaltungen sind Gegenstand abhängiger Ansprüche.

Es wird demgemäss eine Sensoranordnung mit einem Gehäuse, einem im Gehäuse monolithisch integrierten Sensor mit drei Anschlusskontakten am Gehäuse zum Kontaktieren des Sensors, offenbart, wobei in dem Gehäuse ein frei programmierbarer digitaler Prozessor, ein Programmspeicher und ein Datenspeicher zum Steuern und/oder Verarbeiten von Funktionalitäten und/oder Messdaten des Sensors integriert sind.

Vorzugsweise dienen nur zwei Anschlusskontakten zum Anlegen sowohl einer Versorgungsspannung, zum Übertragen von Daten in die Sensoranordnung als auch zum Übertragen von Ausgabedaten aus der Sensoranordnung. Über einen der Anschlusskontakte sind bevorzugt sowohl eine Versorgungsspannung als auch ein Takt einspeisbar.

Eine integrierte Schnittstelle dient bevorzugt zum Demodulieren eines Taktes aus einer angelegten Versorgungsspannung. Eine integrierte Schnittstelle dient insbesondere zusätzlich auch zum Demodulieren von Daten aus einer angelegten Versorgungsspannung.

Der dritte Anschlusskontakt dient zum insbesondere unidirektionalen Ausgeben von Ausgabedaten, insbesondere mittels des Sensors gemessener Daten, aus der Sensoranordnung. Dadurch wird eine Hochgeschwindigkeits-Schnittstelle zum Ausgeben von Messdaten bereitgestellt. Insbesondere können Messdaten bei einer entsprechenden internen Verschaltung gegebenenfalls sogar parallel zu einem Programmierungsbetrieb über die beiden ersten Anschlusskontakte fortgesetzt ausgegeben werden.

Die Steuereinrichtung ist bevorzugt über einen integrierten Bus, insbesondere 8-Bit-, 16-Bit- oder 24-Bit- Adressund/oder Datenbus, an weitere Schaltungskomponenten angeschlossen. Eine integrierte Schnittstelle setzt dabei vorzugsweise serielle Daten von den Anschlusskontakten als parallele Daten auf den Bus um.

Einer- serielle synchrone Testechaltungs-Schnittstelle dient bevorzugt dazu, die Schaltung mittels einer Modulation einer Versorgungsspannung und/oder mittels einer Strommodulation über.die zwei oder drei Anschlusskontakte zu betreiben und/oder anzusteuern.

Das Gehäuse kann weitere Anschlusskontakte zum Ansteuern einer externen Einrichtung aufweisen, insbesondere Anschlusskontakte für eine Speicherbus-Schnittstelle zu einem externen Speicher oder Anschlusskontakte für eine Programmier- und/oder Testschaltung.

Der Sensor ist bevorzugt als ein Hall-Sensor ausgebildet. Weitere integrierte Komponenten können insbesondere ein Taktsignal und/oder ein Interruptsignal für den Prozessor erzeugen. Ein Temperatursensor ist vorteilhaft zum Bereitstellen eines Temperatursignals zum Kompensieren von Temperatureinflüssen.

Bevorzugt wird außerdem ein Verfahren zum Ansteuern einer solchen monolithischen Sensoranordnung, wobei verfahrensgemäß ein Takt und/oder einzugebende Daten auf eine Versorgungsspannung aufmoduliert und an zumindest einen der Anschlusskontakte für die Versorgungsspannung angelegt werden, wobei zum Aufmodulieren zumindest zwei Spannungspegel oberhalb eines Versorgungsspannungspegels für eine integrierte Schaltungsanordnung der Sensoranordnung verwendet werden.

Bevorzugt wird außerdem ein Verfahren zum Ansteuern einer solchen monolithischen Sensoranordnung, wobei verfahrensgemäß serielle Ein- und/oder Ausgabedaten an den Anschlusskontakten auf eine parallele Bus-Schnittstelle innerhalb der Sensoranordnung umgesetzt oder gewandelt werden bzw. parallele Daten von einem Bus innerhalb der Sensoranordnung als serielle Ausgabedaten auf die Anschlusskontakte umgesetzt oder gewandelt werden.

Vorteilhaft sind demgemäss monolithische Sensoren, bei denen in einem Gehäuse zusätzlich zu einem eigentlichen Sensor ein frei programmierbarer digitaler Prozessor integriert ist, so dass neue Schnittstellenstandards, neue Protokolle und neue Algorithmen zur digitalen Signalverarbeitung und/oder zum Abgleich oder zur Kompensation von Störgrößen einfach durch eine Software-Änderung umsetzbar sind. Eine derartige Software kann in dem Programmspeicher integriert werden. Vorzugsweise umfasst ein solcher monolithischer Sensor zusätzlich zu dem eigentlichen Prozessor weitere für dessen Betrieb in üblicher Art und Weise erforderliche Komponenten, beispielsweise Speicher wie RAM, ROM, Flash, Eingabe-/ Ausgabemodule wie Zeitgabeeinrichtungen / PWM (Pulse Width Modulation / Impulsbreiten-Modulation), UART (Universal Asynchronous Receiver/Transmitter / Universeller Asynchroner Empfänger/Sender), SPI (Serial Peripheral Interface / Serielle periphere Schnittstelle) oder ein CapCom.

Bevorzugt werden demgemäss monolithische Sensoren, deren Gehäuse ausschließlich nur zwei oder drei Anschlusskontakte aufweisen. Insbesondere für das Bereitstellen weiterer Funktionalitäten können natürlich auch zusätzlich Anschlusskontakte an dem Gehäuse vorgesehen und belegt werden. Beispielsweise kann zur komfortableren und schnelleren Softwareentwicklung zur Bereitstellung von Beobachtungspunkten, Unterbrechungspunkten, einer Echtzeitnachverfolgung etc. eine spezielle Bondout-Version der Sensoranordnung mit der Steuereinrichtung vorgesehen werden. Ein solcher durch das Gehäuse ausgebildeter Bondout-Chip kann abweichend von einer Standardausführung entsprechend zusätzliche Anschlüsse zu Testzwecken aufweisen, wobei die Anschlüsse vorzugsweise eine Verbindung zu wichtigen Knoten auf dem eigentlichen Chip bzw. in der eigentlichen integrierten Schaltungsanordnung bieten. Solche zusätzlichen Anschlusskontakte können beispielsweise zum Ausbilden einer externen Speicherbus-Schnittstelle oder einer Debug-Schnittstelle verwendet werden.

Ein Ausführungsbeispiel wird nachfolgend anhand der Zeichnung näher erläutert. Es zeigen:
Fig. 1 schematisch eine Schnittansicht durch ein Gehäuse eines monolithischen Sensors mit diversen Komponenten und
Fig. 2 eine Schnittansicht durch eine demgegenüber modifizierte Ausführungsform.

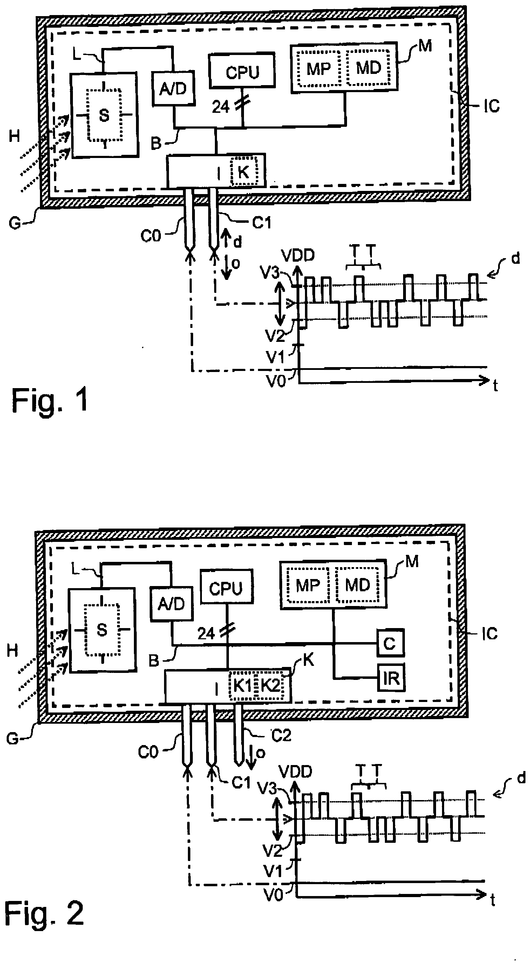

Fig. 1 zeigt schematisch eine Schnittansicht durch ein Gehäuse G eines monolithischen Sensors, wobei die in dem Gehäuse monolithisch integrierten Komponenten lediglich schematisch skizziert sind. Die konkrete Ausgestaltung einer derartigen im Gehäuse G aufgenommenen integrierten Schaltungsanordnung IC kann in für integrierte Schaltungsanordnungen üblicher Art und Weise gefertigt werden. Neben den dargestellten Komponenten können weitere Komponenten in der Schaltungsanordnung integriert sein, welche für den Betrieb dieses monolithischen Sensors in üblicher Art und Weise vorteilhaft oder erforderlich sind.

Das dargestellte Gehäuse G weist zwei Anschlusskontakte CO, C1 zur Kontaktierung der im Gehäuse G.befindlichen Komponenten auf. Die Anschlusskontakte C0, C1 sind vorzugsweise als für sich bekannte sogenannte Pins ausgebildet, welche in einen Stecksockel einsetzbar sind. Die Anschlusskontakte CO, C1 führen innerhalb des Gehäuses G in eine Schnittstellenschaltung I. Die Schnittstellenschaltung I setzt Signale bzw. Daten von den Anschlusskontakten C0, C1 auf einen internen Bus B um bzw. in umgekehrter Richtung Daten von dem integrierten Bus B auf einen oder beide der Anschlusskontakte C0, C1 um. Der Bus B ist vorzugsweise als paralleler Bus ausgestaltet, beispielsweise als 8-Bit-Datenbus und 16-Bit-Adressbuß. Anstelle eines 24-Bit-Bus für die Adress- und Datenübertragung können natürlich auch getrennte Busse in der integrierten Schaltungsanordnung IC ausgebildet sein. Der Bus B dient dazu, verschiedene in der integrierten Schaltungsanordnung C aufgenommene Komponenten miteinander zu verbinden.

Eine bevorzugte Komponente stellt ein Sensor S dar, wobei beispielhaft ein besonders bevorzugter Kontroll-Sensor zum Erfassen.eines den monolithischen Sensor beeinflussenden Magnetfelds H skizziert ist. Um die analogen Signale eines derartigen analogen Sensors S für die Verarbeitung durch weitere Komponenten in digitaler Form bereitstellen zu können, ist der Sensor S über eine Leitung L an einen Analog/Digital-Wandler angeschlossen, welcher die digitalen Daten direkt an einen Prozessor CPU oder über den Bus B an den Prozessor CPU oder weitere Komponenten überträgt.

Der Prozessor CPU ist ein frei programmierbarer digitaler Prozessor und stellt ein weiteres Merkmal des monolithischen Sensors dar. Um einen solchen frei programmierbaren digitalen Prozessor CPU betreiben zu können, ist dieser über den Bus B mit weiteren für dessen Betrieb erforderlichen Komponenten in üblicher Art und Weise verbunden. Insbesondere sind diesbezüglich ein Datenspeicher MD und ein Programmspeicher MP in der integrierten Schaltungsanordnung implementiert. Beispielhaft sind der Datenspeicher MD und der Programmspeicher MP in einer einzigen Speichereinrichtung M aufgenommen, möglich ist jedoch auch eine Ausgestaltung mit eigenständigen Speichereinrichtungen. Neben der Möglichkeit, den Speicher M über den Bus B mit dem Prozessor CPU zu verbinden, besteht zusätzlich oder alternativ auch die Möglichkeit, den Prozessor CPU als Prozessorkern mit direkt angeschlossener Speicherkapazität auszugestalten.

Zum Betreiben der dargestellten integrierten Schaltungsanordnung IC muss dieser eine Versorgungsspannung VDD angelegt werden. Dazu ist der erste der Anschlusskontakte C0 beispielsweise mit einer Basisspannung V0 verbunden und am zweiten der Anschlusskontakte C1 die Versorgungsspannung VDD angelegt. Da die beiden Anschlusskontakte C0, C1 gleichzeitig auch zur Übertragung von Daten verwendet werden, werden die Daten der angelegten Versorgungsspannung VDD aufmoduliert.

Bei dem dargestellten Ausführungsbeispiel wird gemäß dem skizzierten Spannungs-Zeitdiagramm die angelegte Versorgungsspannung VDD über den Verlauf der Zeit t moduliert. Beispielsweise soll als Versorgungsspannung für die integrierte Schaltungsanordnung IC ein erster Versorgungsspannungspegel V1 erforderlich sein. Die Modulation von Daten erfolgt dadurch, dass zur Datenübertragung eine variierende Versorgungsspannung VDD mit einem höheren Spannungspegel als dem ersten Versorgungsspannungspegel V1 angelegt wird. Insbesondere werden vorzugsweise zwei oder auch mehr höhere Spannungspegel V2, V3 in ein entsprechendes Protokoll implementiert, so dass nicht nur reine Daten sondern vorzugsweise auch ein Takt P mittels der Versorgungsspannung VDD übertragen werden kann. Die Schnittstellenschaltung I nimmt somit gemäß der bevorzugten Ausführungsform eine Umsetzung einer seriellen Datenübertragung auf eine parallele Datenübertragung vor bzw. in umgekehrter Richtung zur Ausgabe der mittels des Sensors S gemessenen Daten oder sonstiger Daten eine Umsetzung paralleler Daten auf serielle Daten vor. Um die Spannungspegel analysieren zu können, das heißt die mittels der Versorgungsspannung VDD übertragenen Daten d bestimmen zu können, weist die Schnittstellenschaltung I vorzugsweise eine Komparatorschaltung K auf.

Fig. 2 zeigt eine modifizierte Ausführungsform, wobei nachfolgend lediglich gegenüber Fig. 1 verschiedene Komponenten und Funktionen beschrieben werden. Ansonsten bezeichnen gleiche Bezugszeichen gleiche oder gleich wirkende Komponenten und Funktionen wie in Fig. 1.

Zusätzlich zu den beiden Anschlusskontakten C0, C1 ist bei dieser Ausführungsform ein dritter Anschlusskontakt C2 durch die Wandung des Gehäuses G zur Schnittstellenschaltung I geführt. Der dritte Anschlusskontakt C2 dient dabei zum Ausbilden einer Hochgeschwindigkeitsschnittstelle zur Ausgabe von Ausgabedaten o. Solche Ausgabedaten können prinzipiell als analoge Daten direkt vom Sensor S bereitgestellt werden, jedoch werden Ausführungsformen bevorzugt, bei denen die Ausgabedaten o als digitale Daten ausgegeben werden.

Anhand Fig. 2 ist außerdem die Komparatorschaltung K mit zwei integrierten Komparatoren K1, K2 skizziert. Durch das Vorsehen von zwei Komparatoren K1, K2 kann das Überschreiten oder Unterschreiten zweier verschiedener Spannungspegel wie dem zweiten und dem dritten dargestellten Spannungspegel V2, V3 erfasst werden.

Alternativ zu einer Unterschreitung eines Pegels kann auch eine Überschreitung in einen Raum zwischen dem Pegel und einem höheren Pegel als Kriterium angesetzt werden. Alternativ zu einer Überschreitung eines Pegels kann entsprechend auch eine Unterschreitung in einen Raum zwischen dem Pegel und einem niedrigeren Pegel als Kriterium angesetzt werden.

Außerdem sind als weitere beispielhafte Komponenten ein Temperatursensor C zum Erfassen einer Betriebstemperatur und/oder einer Umgebungstemperatur der integrierten Schaltung IC sowie eine Interruptschaltung IR zum Erzeugen eines Interruptsignals skizziert. Das Bereitstellen eines-solchen Temperatursensors C ermöglicht mittels des Prozessors CPU die von dem Sensor S erhaltenen Daten hinsichtlich momentaner Temperaturen bei Bedarf abzugleichen bzw. zu kompensieren. Prinzipiell sind auch weitere derartige Schaltungskomponenten integrierbar, welche eine Kompensation sonstiger interner oder externer Störgrößen ermöglichen lassen.

Die Vielzahl der Komponenten kann zusätzlich zu den bereits aufgezählten Komponenten auch aufweisen einen eigenständigen Oszillator, taktmultiplizierende phasengekoppelte Schleifen, einen Takteingang für einen Quarz oder einen Taktgenerator, einen sogenannten Bandgap und Regulator für eine Bereitstellung einer niedrigeren Betriebsspannung, eine SpeicherbusSchnittstelle für Flash und/oder für eine Emulation eines RAM, einen Boot-ROM, einen RAM, einen EEPROM, einen Hall-Sensor mit einem Analog-/Digital-Wandler und einem Dezimationsfilter, einem Temperatursensor mit einem Analog-/Digital-wandler, einen Multiplizierer, eine Taktteilerkette, Timer, eine Überwachungsschaltung (WatchDog), ein CapCom mit beispielsweise drei Eingängen und drei Ausgängen, eine PWM-Schaltung, eine LIN-UART-Schnittstelle, eine serielle Prüfschnittstelle, eine biphasige Hall-Sensor-Schnittstelle und eine dreiadrige biphasige M-Schnittstelle für Master- oder Slave-Betrieb und/oder eine zweiadrige biphasige M-Schnittstelle für Master- oder Slave-Betrieb.

Insbesondere eine besonders bevorzugte und eigenständig vorteilhafte serielle synchrone Prüf-Schnittstelle kann auch mit weiteren Anschlusskontakten am Gehäuse G bereitgestellt werden. Zusätzlich oder alternativ kann für eine Prüfung und/oder für eine Programmierung anstelle des Bereitstellens weiterer Anschlusskontakte auch eine Vielzahl weiterer Spannungspegel vorgesehen werden, um mittels einer entsprechenden Modulation bzw. Codierung der angelegten Versorgungsspannung entsprechende serielle Prüfzugriffe zu ermöglichen.

## Patentansprüche

1. Sensoranordnung mit
- einem Gehäuse (G),
- einem im Gehäuse (G) integrierten Sensor (S) und
- in dem Gehäuse (G) ein frei programmierbarer digitaler Prozessor (CPU), ein Programmspeicher (MP) und ein Datenspeicher (MD) zum Steuern und / oder Verarbeiten von Funktionalitäten und /oder Messdaten des Sensors (S) mit dem Sensor monolithisch integriert sind, und einen ersten und einen zweiten Anschlusskontakt zum Kontaktieren des Sensors am Gehäuse aufweist,
- **dadurch gekennzeichnet, dass**
- über einen der beiden Anschlusskontakte (CO, C1) ein Takt (T) und / oder einzugebende Daten (d) auf eine Versorgungsspannung (VDD) aufmoduliert ist, und
- ein dritter Anschlusskontakt (C2) zum Kontaktieren des Sensors an dem Gehäuse ausgebildet ist, zur Ausbildung einer unidirektionalen Ausgabe von Ausgabedaten (o) der Sensoranordnung.

2. Sensoranordnung nach Anspruch 1, wobei einer der beiden Anschlusskontakte (CO, C1) zum Übertragen von Ausgabedaten (o) aus der Sensoranordnung ausgebildet list.

3. Sensoranordnung nach einem vorstehenden Anspruch mit einer integrierten Schnittstelle (I) zum Demodulieren des Taktes (T) aus der angelegten Versorgungsspannung (VDD).

4. Sensoranordnung nach einem vorstehenden Anspruch mit einer integrierten Schnittstelle (I) zum Demodulieren von Daten (d) aus der angelegten Versorgungsspannung (VDD).

5. Sensoranordnung nach einem vorstehenden Anspruch wobei mit dem dritten Anschlusskontakt (C2) mittels des Sensors (S) gemessenen Daten, aus der Sensoranordnung ausgegeben werden.

6. Sensoranordnung nach einem vorstehenden Anspruch, bei der die Steuereinrichtung (CPU) über einen integrierten Bus, insbesondere 8-Bit-, 16-Bit- oder 24-Bit- Adressund/oder Datenbus, an weitere Schaltungskomponenten angeschlossen ist.

7. Sensoranordnung nach Anspruch 7, bei der eine integrierte Schnittstelle (I) serielle Daten (d) von den Anschlusskontakten (CO, C1) als parallele Daten auf den Bus (B) umsetzt.

8. Sensoranordnung nach einem vorstehenden Anspruch mit einer seriellen synchronen Testschaltungs-Schnittstelle, die mittels einer Modulation der Versorgungsspannung (VDD) und / oder mittels einer Strommodulation über die zwei oder drei Anschlusskontakte (CO, Cl, C2) betreibbar und/oder ansteuerbar ist.

9. Sensoranordnung nach einem vorstehenden Anspruch, bei der das Gehäuse (G) weitere Anschlusskontakte zum Ansteuern einer externen Einrichtung aufweist, insbesondere Anschlusskontakte für eine Speicherbus-Schnittstelle zu einem externen Speicher oder Anschlusskontakte für eine Programmier- und/oder Testschaltung.

10. Sensoranordnung nach einem vorstehenden Anspruch, bei welcher der Sensor (S) als ein Hall-Sensor ausgebildet ist.

11. Sensoranordnung nach einem vorstehenden Anspruch, bei der weitere integrierte Komponenten das Taktsignal und/oder ein Interruptsignal für den Prozessor (CPU) erzeugen.

12. Sensoranordnung nach einem vorstehenden Anspruch mit einem Temperatursensor (C) zum Bereitstellen eines Temperatursignals zum Kompensieren von Temperatureinflüssen.

13. Verfahren zum Ansteuern einer Sensoranordnung nach einem vorstehenden Anspruch, bei dem ein Takt (T) und / oder einzugebende Daten (d) auf eine Versorgungsspannung (VDD) aufmoduliert und an zumindest einen der Anschlusskontakte (C1) für die Versorgungsspannung (VDD) angelegt werden, wobei zum Aufmodulieren zumindest zwei Spannungspegel (V2, V3) oberhalb eines Versorgungsspannungspegels (V1) für eine integrierte Schaltungsanordnung (IC) der Sensoranordnung verwendet werden.

14. Verfahren zum Ansteuern einer Sensoranordnung nach einem vorstehenden Anspruch, bei dem serielle Ein- und / oder Ausgabedaten an den Anschlusskontakten auf eine parallele Bus-Schnittstelle (B) innerhalb der Sensoranordnung umgesetzt oder gewandelt werden bzw. paralleler Daten von einem Bus (B) innerhalb der Sensoranordnung als serielle Ausgabedaten auf die Anschlusskontakte (CO, C1, C2) umgesetzt oder gewandelt werden.

## Claims

1. Sensor arrangement comprising
- a housing (G) and
- a sensor (S) integrated in the housing (G),
- a freely programmable digital processor (CPU), a program memory (MP) and a data memory (MD) for the controlling and/or processing of functionalities and/or measurement data of the sensor (S) being monolithically integrated together with the sensor in the housing (G) and the arrangement having a first and a second terminal contact for contacting the sensor at the housing
**characterised in that**
- a clock pulse (T) and/or data (d) to be input is or are modulated on a supply voltage (VDD) by way of one of the two terminal contacts (CO, C1) and
- a third terminal contact for contacting the sensor is formed at the housing in order to form a unidirectional output of output data (o) of the sensor arrangement.

2. Sensor arrangement according to claim 1, wherein one of the two terminal contacts (CO, C1) is constructed for transmission of output data (o) from the sensor arrangement.

3. Sensor arrangement according to a preceding claim with an integrated interface (I) for demodulation of the clock pulse (T) from the applied supply voltage (VDD).

4. Sensor arrangement according to a preceding claim with an integrated interface (I) for demodulation of data (d) from the applied supply voltage (VDD).

5. Sensor arrangement according to a preceding claim, wherein data measured by means of the sensor (S) are output from the sensor arrangement by the third terminal contact (C2).

6. Sensor arrangement according to a preceding claim, in which the control device (CPU) is connected with further circuit components by way of an integrated bus, particularly an 8 bit, 16 bit or 24 bit address and/or data bus.

7. Sensor arrangement according to claim 7, in which an integrated interface (I) converts serial data (d) from the terminal contacts (C0, C1) into parallel data on the bus (B).

8. Sensor arrangement according to a preceding claim with a serial, synchronous test circuit interface, which is operable and/or activatable by means of modulation of the supply voltage (VDD) and/or by means of current modulation by way of the two or three terminal contacts (C0, C1, C2).

9. Sensor arrangement according to a preceding claim, in which the housing (G) has further terminal contacts for activation of an external device, particularly terminal contacts for a memory bus interface to an external memory or terminal contacts for a programming and/or test circuit.

10. Sensor arrangement according to a preceding claim, in which the sensor (S) is constructed as a Hall sensor.

11. Sensor arrangement according to a preceding claim, in which the further integrated components generate the clock pulse signal and/or an interrupt signal for the process (CPU).

12. Sensor arrangement according to a preceding claim with a temperature sensor (C) for providing a temperature signal for compensation for temperature influences.

13. Method of activating a sensor arrangement according to a preceding claim, in which a clock pulse (T) and/or data (d) to be input is or are modulated on a supply voltage (VDD) and applied to at least one of the terminal contacts (C1) for the supply voltage (VDD), wherein at least two voltage levels (V2, V3) above a supply voltage level (V1 for an integrated circuit arrangement (IC) of the sensor arrangement are used for the modulation.

14. Method of activating a sensor arrangement according to a preceding claim, in which the serial input and/or output data at the terminal contacts are changed or converted on a parallel bus interface (B) within the sensor arrangement or parallel data from a bus (B) within the sensor arrangement are changed or converted into serial output data on the terminal contacts (C0, C1, C2).

## Revendications

1. Dispositif de capteur avec
- un boîtier (G),
- un capteur (S) intégré dans le boîtier (G) et,
- dans le boîtier (G), un processeur numérique librement programmable (CPU), une mémoire de programmes (MP) et une mémoire de données (MD) sont intégrés de façon monolithique avec le capteur pour la commande et/ou le traitement de fonctionnalités et/ou de données de mesure du capteur (S)
et présente sur le boîtier un premier et un deuxième contacts de raccordement pour contacter le capteur, **caractérisé en ce qu'**
- une cadence (T) et/ou des données à entrer (d) sont modulées sur une tension d'alimentation (VDD) au moyen de l'un des deux contacts de raccordement (CO, C1), et
- un troisième contact de raccordement (C2) pour contacter le capteur est formé sur le boîtier, afin de former une sortie unidirectionnelle de données de sortie (o) du dispositif de capteur.

2. Dispositif de capteur selon la revendication 1, dans lequel l'un des deux contacts de raccordement (C0, C1) est réalisé en vue de la transmission de données de sortie (o) hors du dispositif de capteur.

3. Dispositif de capteur selon une revendication précédente, avec une interface intégrée (I) pour démoduler la cadence (T) de la tension d'alimentation appliquée (VDD).

4. Dispositif de capteur selon une revendication précédente, avec une interface intégrée (I) pour démoduler des données (d) de la tension d'alimentation appliquée (VDD).

5. Dispositif de capteur selon une revendication précédente, dans lequel des données mesurées au moyen du capteur (S) sont envoyées hors du dispositif de capteur avec le troisième contact de raccordement (C2).

6. Dispositif de capteur selon une revendication précédente, dans lequel le dispositif de commande (CPU) est raccordé à d'autres composants du circuit au moyen d'un bus intégré, en particulier un bus d'adresses et/ou un bus de données à 8 bits, à 16 bits ou à 24 bits.

7. Dispositif de capteur selon la revendication 7, dans lequel une interface intégrée (I) convertit des données sérielles (d) des contacts de raccordement (C0, C1) en données parallèles sur le bus (B).

8. Dispositif de capteur selon une revendication précédente avec une interface de circuit de test synchrone sérielle, qui peut être activée et/ou commandée au moyen d'une modulation de la tension d'alimentation (VDD) et/ou au moyen d'une modulation de courant par l'intermédiaire des deux ou trois contacts de raccordement (C0, C1, C2).

9. Dispositif de capteur selon une revendication précédente, dans lequel le boîtier (G) présente d'autres contacts de raccordement pour commander un dispositif externe, en particulier des contacts de raccordement pour une interface de bus de mémoire vers une mémoire externe ou des contacts de raccordement pour un circuit de programmation et/ou de test.

10. Dispositif de capteur selon une revendication précédente, dans lequel le capteur (S) est constitué par un capteur de Hall.

11. Dispositif de capteur selon une revendication précédente, dans lequel d'autres composants intégrés produisent le signal de cadence et/ou un signal d'interruption pour le processeur (CPU).

12. Dispositif de capteur selon une revendication précédente avec un capteur de température (C) pour fournir un signal de température destiné à compenser des influences de la température.

13. Procédé de commande d'un dispositif de capteur selon une revendication précédente, dans lequel on module une cadence (T) et/ou des données à entrer (d) sur une tension d'alimentation (VDD) et on les applique à au moins l'un des contacts de raccordement (C1) pour la tension d'alimentation (VDD), dans lequel on utilise pour la modulation au moins deux niveaux de tension (V2, V3) au-dessus d'un niveau de tension d'alimentation (V1) pour un dispositif de circuit intégré (IC) du dispositif de capteur.

14. Procédé de commande d'un dispositif de capteur selon une revendication précédente, dans lequel on convertit ou on transpose des données d'entrée/sortie sérielles aux contacts de raccordement sur une interface de bus parallèle (B) à l'intérieur du dispositif de capteur ou on convertit ou on transpose des données parallèles d'un bus (B) à l'intérieur du dispositif de capteur sous forme de données de sortie sérielles aux contacts de raccordement (C0, C1, C2).
